(19) **Europäisches Patentamt**
**European Patent Office**
**Office européen des brevets**

(11) **EP 2 742 275 B1**

(12) **FASCICULE DE BREVET EUROPEEN**

(45) Date de publication et mention
de la délivrance du brevet:
**09.05.2018 Bulletin 2018/19**

(21) Numéro de dépôt: **12751096.4**

(22) Date de dépôt: **02.08.2012**

(51) Int Cl.:
*F17C 11/00* $^{(2006.01)}$     *C01B 3/00* $^{(2006.01)}$
*C01C 1/00* $^{(2006.01)}$

(86) Numéro de dépôt international:
**PCT/FR2012/051841**

(87) Numéro de publication internationale:
**WO 2013/024224 (21.02.2013 Gazette 2013/08)**

(54) **PROCÉDÉ DE REMPLISSAGE D'UN RÉSERVOIR DE STOCKAGE DE GAZ**

VERFAHREN ZUM FÜLLEN EINES GASTANKS

METHOD OF FILLING A GAS STORAGE TANK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **12.08.2011 FR 1102515**

(43) Date de publication de la demande:
**18.06.2014 Bulletin 2014/25**

(73) Titulaire: **Coldway**
**66380 Paris (FR)**

(72) Inventeurs:
• **KINDBEITER, Francis**
**F-66380 Pia (FR)**
• **RIGAUD, Laurent**
**F-66380 Pia (FR)**

(74) Mandataire: **Schwalek, Valérie et al**
**Cabinet SCB**
**BP 30783**
**59034 Lille Cedex (FR)**

(56) Documents cités:
**WO-A1-2009/057127     WO-A1-2010/025948
DE-A1-102006 052 109     FR-A- 1 502 818
US-A- 5 441 716**

## Description

La présente invention concerne un procédé de remplissage d'un réservoir de stockage d'un gaz initialement sous phase gazeuse en vue de son stockage dans celui-ci sous phase solide.

Les documents WO2010/025948, US5441716 et FR1502818 décrivent des méthodes de stockage d'un gaz sur un réactif.

On sait que pour assurer le stockage des gaz qui se trouvent habituellement sous phase gazeuse dans les conditions normales de température et de pression, notamment afin d'assurer leur transport, on réalise une compression de ces derniers afin de les faire passer sous phase liquide, si bien que la quantité de gaz stockée sous un même volume s'en trouve considérablement augmentée.

Cependant, le stockage sous phase liquide de ces gaz présente divers inconvénients.

Un premier inconvénient est l'instabilité de la phase liquide stockée, ce qui contraint l'utilisateur à prendre un certain nombre de précautions notamment lorsqu'il s'agit de leur transport.

Un second inconvénient est lié au fait que, d'une part, le volume du gaz liquéfié augmente avec la température, et que, d'autre part, la pression dans les réservoirs de stockage est élevée et augmente également avec la température, si bien que les réservoirs qui les contiennent doivent intégrer ces différents facteurs, contraignant ainsi le concepteur à leur donner une épaisseur bien supérieure à celle qu'ils auraient s'ils devaient contenir le gaz sous sa seule phase gazeuse.

Il existe par ailleurs, dans un autre domaine de la technique, des systèmes de production de froid par voie thermochimique dans lesquels un réacteur est mis en communication contrôlée avec un réservoir contenant un gaz sous phase liquide. Lorsque le réacteur et le réservoir sont mis en communication, le gaz liquide contenu dans le réservoir se vaporise, ce qui absorbe une certaine quantité de chaleur, si bien que le réservoir se refroidit, et ce gaz est absorbé par le produit réactif, générant ainsi une réaction chimique exothermique, si bien que le réacteur est la source d'un dégagement de chaleur. Une fois la réaction terminée, si l'on réchauffe le produit contenu dans le réacteur, on libère le gaz qui a été absorbé par le produit réactif et ce gaz se condense alors dans le réservoir. On utilise de tels dispositifs dans certains systèmes de production de froid, notamment lorsque l'on souhaite disposer d'une autonomie de fonctionnement à l'égard d'une source d'alimentation électrique.

Dans une nouvelle application on peut mettre en oeuvre la réaction thermochimique utilisée précédemment pour produire du froid, afin d'assurer le stockage sous phase solide d'un gaz initialement sous phase gazeuse. A cet effet on utilise le réacteur d'un tel dispositif en tant que réservoir de stockage du gaz. En effet, on a constaté que, lorsque la totalité du gaz sous phase gazeuse a réagi avec le produit réactif, il en résulte un produit de réaction qui forme un composé solide et c'est ce dernier qui fait l'objet du stockage.

Ainsi par exemple, dans le cas d'un produit réactif constitué de chlorure de calcium et d'un gaz constitué d'ammoniac, cette réaction thermochimique est la suivante :

$$Ca(NH_3)_2Cl_2 + 4(NH_3) \leftrightarrow Ca(NH_3)_6Cl_2 + \delta H_R$$

et le produit de réaction obtenu est solide et constitué de chlorure de calcium.

Cependant, pour appliquer la présente réaction au domaine du stockage du gaz on fait en sorte, pour qu'il soit rentable, de stocker la plus grande quantité de gaz possible. Or on sait que, dans la pratique, on utilise un produit réactif qui est mélangé à un produit dit "liant matriciel" qui est destiné à assurer deux fonctions.

Une première fonction du liant matriciel est de permettre une libre circulation du gaz à l'intérieur du produit réactif. On sait en effet que pour que la totalité du produit réactif soit en mesure de réagir avec le gaz il est impératif que ce dernier puisse venir en contact avec la totalité de sa « masse ». C'est pourquoi on a proposé dans les techniques de production de froid qui font appel à ce même type de réaction thermochimique, d'utiliser un liant matriciel qui est constitué préférentiellement de graphite naturel expansé et qui forme avec le produit réactif un mélange réactif, se présentant notamment sous la forme d'un bloc réactif, au travers duquel le gaz peut se déplacer librement.

Une seconde fonction du liant matriciel est d'évacuer vers l'extérieur la chaleur produite par la réaction thermochimique sous peine de bloquer celle-ci avant quelle ne soit complète et ce dernier devra ainsi posséder une bonne conductivité thermique, ce qui est le cas du graphite ci-dessus mentionné.

On a constaté que lorsque l'on fait appel au type de réaction thermochimique précédemment utilisé dans le domaine du froid pour assurer un stockage de gaz il est important de faire appel à un mélange réactif dont la proportion en produit réactif est beaucoup plus élevée, à savoir de l'ordre de 85 à 96% en masse et préférentiellement de l'ordre de 94%.

On comprend dans ces conditions que le remplissage d'un tel mélange réactif par le gaz sous phase gazeuse est d'autant plus difficile que, sous peine de causer des détériorations irréversibles au produit réactif, il est nécessaire d'éviter que le gaz liquide ne vienne en contact avec celui-ci.

La présente invention a pour but de proposer un procédé permettant de réaliser de façon optimale un tel remplissage du mélange réactif par le gaz à stocker afin que l'utilisateur soit à même de contrôler les deux paramètres essentiels de cette opération, à savoir le temps de remplissage et le fait que, à aucun moment pendant toute l'opération de remplissage, du gaz liquéfié ne puisse pénétrer dans le réservoir de stockage.

La présente invention a ainsi pour objet un procédé de remplissage d'un réservoir avec un gaz sous phase gazeuse en vue de son stockage dans celui-ci sous phase solide, ce réservoir de stockage contenant à cet effet un produit réactif, le produit réactif et le gaz étant tels que, lorsqu'ils sont mis en présence l'un de l'autre, ils sont l'objet d'une réaction thermochimique ayant pour effet l'absorption du gaz par le produit réactif et la production d'un produit de réaction solide, et, à l'inverse, ils sont l'objet d'une réaction de désorption du gaz absorbé par le produit réactif sous l'effet d'un chauffage appliqué à celui-ci lorsqu'il a absorbé du gaz, caractérisé en ce que l'on introduit ledit gaz dans le réservoir de stockage:

- soit à une pression de remplissage qui est égale à la pression d'équilibre du produit réactif à la température de remplissage plus $\alpha$ fois la différence entre la pression de vapeur saturante du gaz à la température de remplissage et la pression d'équilibre du produit réactif à cette même température; la valeur de $\alpha$ étant comprise entre 0,1 et 0,9 et étant préférentiellement égale à 0,5,
- soit à une température de remplissage qui est égale à la température de vaporisation du gaz à la pression de remplissage plus $\beta$ fois la différence entre la température d'équilibre du produit réactif à la pression de remplissage et la température de vaporisation du gaz à cette même pression; la valeur de $\beta$ étant comprise entre 0,1 et 0,9 et étant préférentiellement égale à 0,5.

Dans un mode de mise en oeuvre particulièrement intéressant de l'invention, on obtiendra la pression de remplissage du gaz en jouant sur la température du réservoir de stockage et sur celle du récipient contenant le gaz. Pour ce faire, pendant le remplissage:

- on maintiendra à température constante le réservoir de stockage et le récipient contenant le gaz,
- pour une température de remplissage donnée, la température de maintien du récipient contenant le gaz sera égale à la température de vaporisation du gaz à la pression de remplissage.

Ledit maintien à température pourra notamment être obtenu par immersion du réservoir de stockage et/ou du récipient contenant le gaz, dans un bain thermostaté à la température souhaitée. On pourra également faire appel à un collier à température régulée qui viendra entourer le réservoir et/ou le récipient que l'on souhaite conserver à température donnée constante.

De façon à permettre une bonne circulation du gaz dans la masse du produit réactif, on pourra mélanger à ce dernier un "liant matriciel" de façon à constituer un mélange dit "mélange réactif". Ce liant matriciel pourra avantageusement être constitué de graphite naturel expansé et on fera en sorte que la masse volumique apparente du mélange réactif composé du graphite naturel expansé et du produit réactif soit comprise entre 40 kg/m$^3$ et 120 kg/m$^3$ et préférentiellement de l'ordre de 50 kg/m$^3$.

Le gaz à stocker pourra être constitué d'ammoniac et le produit réactif pourra être notamment constitué de sels du type alcalins, alcalino-terreux, ou métalliques tels que notamment du chlorure de calcium, du chlorure de baryum ou du chlorure de manganèse.

On utilisera préférentiellement un mélange réactif dans lequel la proportion en masse du produit réactif sera comprise entre 50 et 98% et sera préférentiellement de l'ordre de 94%. A titre illustratif, il est décrit une installation de remplissage d'un réservoir de stockage avec un gaz sous phase gazeuse contenu dans un récipient en vue de son stockage sous phase solide dans le réservoir de stockage, ce dernier contenant à cet effet un produit réactif, le produit réactif et le gaz étant tels que, lorsqu'ils sont en présence l'un de l'autre ils sont l'objet d'une réaction thermochimique ayant pour effet l'absorption du gaz par le produit réactif et la production d'un produit de réaction solide, et, à l'inverse, ils sont l'objet d'une réaction de désorption du gaz absorbé par le produit réactif sous l'effet d'un chauffage appliqué à celui-ci lorsqu'il a absorbé du gaz, caractérisée en ce qu'elle comporte des moyens permettant, pendant le remplissage du réservoir de stockage:

- de maintenir à température constante le réservoir de stockage et le récipient contenant le gaz,
- pour une température de remplissage donnée, de régler la température du récipient contenant le gaz à une valeur égale à celle de la température de vaporisation du gaz à la pression de remplissage.

Ces moyens de maintien en température, pendant le remplissage du réservoir de stockage, pourront être constitués de bains thermostatés recevant le réservoir de stockage et/ou ou le récipient contenant le gaz.

On décrira ci-après, à titre d'exemple non limitatif, une forme d'exécution de la présente invention, en référence au dessin annexé sur lequel :

- la figure 1 est un diagramme pression température représentant les courbes du changement d'état de l'ammoniac et de décomposition du chlorure de baryum utilisées dans un premier mode de mise en oeuvre de l'invention,
- la figure 2 est une représentation schématique d'une installation de remplissage pouvant mettre en oeuvre le procédé de remplissage de l'invention;
- la figure 3 est un diagramme pression température représentant les courbes du changement d'état de l'ammoniac et de décomposition du chlorure de baryum utilisées dans un second mode de mise en oeuvre de l'invention,

Dans le premier exemple de mise en oeuvre de l'invention on souhaite remplir de gaz ammoniac un réservoir 1 en vue de le stocker dans celui-ci sous phase solide.

Ce réservoir de stockage 1 contient un produit réactif, en l'espèce du chlorure de baryum, en mesure de réagir avec l'ammoniac et de produire un produit de réaction solide suivant la réaction :

$$BaCl_2 + 8(NH_3) \leftrightarrow BaCl_2(NH_3)_8 + \delta H_R$$

Le produit réactif est mélangé avec un liant matriciel qui, ainsi que mentionné précédemment, a pour fonction d'une part de permettre une libre circulation du gaz à stocker et un bon contact de celui-ci avec la masse du produit réactif et, d'autre part, d'évacuer vers l'extérieur la chaleur produite par la réaction. On désignera mélange réactif le mélange constitué du produit réactif et du liant matriciel.

Les essais menés par la déposante on conduit à constater que pour emmagasiner une quantité de gaz qui soit optimale par rapport au volume de stockage, le taux de produit réactif dans le mélange réactif doit être très supérieur à celui utilisé dans les dispositifs de production de froid exploitant une réaction thermochimique de même type.

Ainsi, dans ces derniers, le taux T de produit réactif est de l'ordre de 75 à 78% c'est-à-dire que, en masse, le mélange réactif contient 75 à 78% de produit réactif et 25 à 22% de graphite naturel expansé.

Suivant l'invention on utilise un mélange réactif dans lequel le taux en masse de produit réactif est compris entre 85 et 96% et préférentiellement de l'ordre de 94%. La masse volumique apparente du mélange réactif composé du graphite naturel expansé et du sel réactif sera comprise entre 40 et 120 kg/m$^3$ et préférentiellement de l'ordre de 50 kg/m$^3$. Dans de telles conditions on sait que l'on est en mesure de stocker une quantité de 500g d'ammoniac dans un volume de un litre de mélange réactif.

Le procédé de remplissage suivant l'invention permet de contrôler la vitesse de remplissage afin notamment de remplir le plus rapidement possible le mélange réactif avec le gaz à stocker sans qu'à aucun moment ce dernier ne passe en phase liquide sous peine de dissoudre le produit réactif et donc de détériorer ce dernier de façon irréversible.

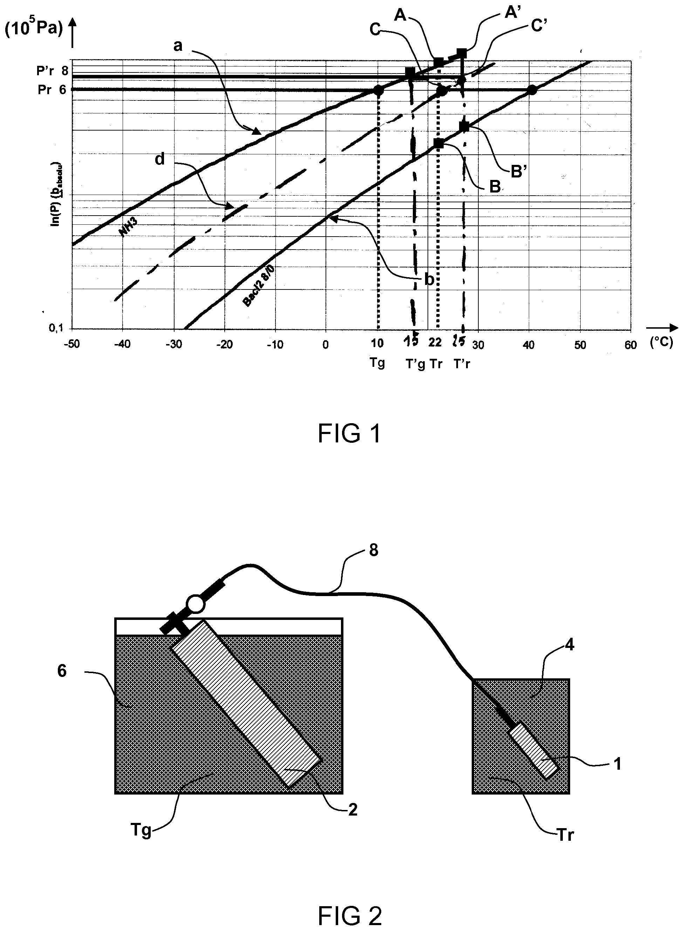

On a représenté sur la figure 1 une courbe a qui est représentative du changement d'état du gaz dont on souhaite remplir le réservoir de stockage 1, à savoir de l'ammoniac, et une courbe b. qui est représentative de la décomposition du chlorure de baryum constituant le produit réactif, en fonction de la température et de la pression.

Dans ce mode de mise en oeuvre de l'invention on choisit une température de remplissage $T_r$ égale par exemple à 22°C et l'on prend en considération le segment AB compris entre le point A représentant la pression de vapeur saturante du gaz à cette température et le point B qui représente la température de décomposition du produit réactif, à savoir le chlorure de baryum, à cette même température. On choisit sur ce segment AB un point C dit point de remplissage. En fonction du choix de ce dernier on sera à même de contrôler le remplissage de façon optimale en fonction des nécessités imposées par l'application choisie.

Ainsi, plus le point de remplissage C est proche de la courbe a plus le remplissage du réservoir de stockage est rapide mais plus le risque d'admettre dans celui-ci des gouttes de liquide est élevé.

Ainsi, si pour une application donnée, le temps de remplissage du réservoir de stockage 1 n'est pas primordial, mais par contre il est essentiel qu'aucune goutte de gaz liquide ne puisse pénétrer dans celui-ci on choisira un point de remplissage C situé par exemple en position médiane entre les points A et B, ainsi que représenté sur la figure 1.

Dans ces conditions on constate sur cette dernière que pour la température de remplissage $T_r$ de 22°C et un point de fonctionnement C médian entre A et B, la pression est de $6.10^5$ Pa, ce qui représente la pression de remplissage $P_r$. Pour l'ammoniac, à cette pression $P_r$, la température de vaporisation est de 10°C.

Dans ces conditions, suivant la présente invention, pour remplir d'ammoniac le réservoir de stockage 1, sans qu'à aucun moment au cours de cette opération de remplissage du gaz liquide ne pénètre dans celui-ci, on le porte et on le maintient à une température de remplissage $T_r$ de 22°C et on porte et on maintient le récipient 2 contenant l'ammoniac à une température $T_g$ de 10°C égale à sa température de vaporisation à la pression de remplissage $P_r$.

Pour ce faire, ainsi que représenté sur la figure 2, on plonge par exemple le réservoir de stockage 1 que l'on souhaite remplir dans une cuve 4 contenant un bain thermostaté à la température $T_r$ de 22°C et on plonge le récipient 2 contenant l'ammoniac dans une autre cuve 6 contenant un bain thermostaté à la température $T_g$ de 10°C et on met en communication, par une conduite 8 le réservoir de stockage 1 et le récipient 2.

Suivant l'invention le maintien en température du réservoir de stockage 1 et du récipient 2 contenant l'ammoniac peut être effectué avec d'autres moyens que des bains thermostatés et par exemple à l'aide de colliers chauffants ou refroidissants.

On peut définir des courbes respectives pour lesquelles tous les points de remplissage $\underline{C}$ se trouvent dans une position déterminée sur le segment AB et notamment au milieu de celui-ci.

On a représenté sur la figure 1 une courbe $\underline{d}$ sur laquelle tous les points de remplissage $\underline{C}$ sont en position médiane.

On a porté sur celle-ci un second point de remplissage C' qui correspond à une autre température de remplissage T'r, 25°C et l'on obtient alors une pression de remplissage P'r de $8.10^5$ Pa pour laquelle la température de vaporisation de l'ammoniac T'g est égale à 15°C. Dans ces conditions on maintiendra, pendant le remplissage, le réservoir de stockage 1 à une température T'r de 25°C et le récipient 2 contenant l'ammoniac à une température T'g de 15°C.

Ainsi que mentionné précédemment, et en fonction des applications, le point de remplissage $\underline{C}$ peut être déplacé sur le segment AB et les limites de ce positionnement peuvent être telles que AC et BC soient $\geq$ AB/10.

Dans ces conditions, $P_r$ étant la pression de remplissage du réservoir de stockage 1, $P_e$ étant la pression d'équilibre du produit réactif à la température de remplissage $T_r$, et $P_s$ étant la pression de vapeur saturante du gaz à la température de remplissage $T_r$ :

$$Pr = Pe + \alpha (Ps - Pe)$$

avec $0{,}1 < \alpha < 0{,}9$

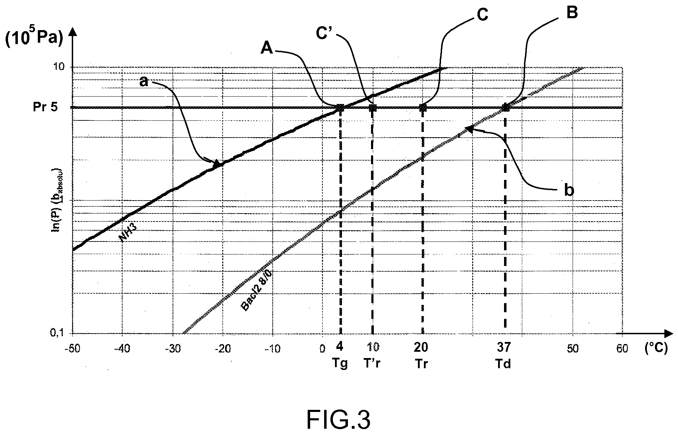

Dans un autre mode de mise en oeuvre de la présente invention et ainsi que représenté sur la figure 3, on choisit une pression de remplissage $P_r$, par exemple de $5.10^5$ Pa, et l'on considère le segment AB compris entre le point $\underline{A}$ représentant la température de vaporisation $T_g$ du gaz (de 4°C) à cette pression et le point $\underline{B}$ représentant la température de décomposition $T_d$ du produit réactif (de 37°C) à cette même pression. On choisit sur ce segment AB un point de remplissage $\underline{C}$. En fonction de la position du point $\underline{C}$ sur le segment AB on sera à même de contrôler le remplissage de façon optimale en fonction des contraintes propres à l'application choisie ainsi que dans le mode de mise en oeuvre précédent. On aura ainsi AC et BC >= AB/10.

Dans ces conditions, $T_r$ étant la température de remplissage du réservoir de stockage 1, Tg étant la température de vaporisation du gaz à la pression de remplissage Pr, Te étant la température d'équilibre du produit réactif à la pression de remplissage Pr, et Tg étant la température de vaporisation du gaz à cette même pression:

$$Tr = Tg + ß (Td - Tg)$$

avec $0{,}1 < \beta < 0{,}9$

Ainsi, si pour une application donnée, le temps de remplissage du réservoir de stockage 1 n'est pas primordial, mais par contre il est essentiel qu'aucune goutte de gaz liquide ne puisse pénétrer dans le celui-ci on choisira un point de remplissage $\underline{C}$ situé par exemple en position médiane entre les points $\underline{A}$ et $\underline{B}$. Dans ces conditions pour une pression de remplissage $\overline{P}_r$ de $5.10^5$ Pa la température de remplissage $T_r$ à laquelle on maintiendra le réservoir de stockage 1 pendant l'opération de remplissage sera de 20°C et la température $T_g$ à laquelle on maintiendra le récipient 2 contenant le gaz sera dès lors de 4°C.

Par contre si pour une autre application le temps de remplissage est primordial on choisira alors un point de fonctionnement $\underline{C}'$ plus proche du point $\underline{A}$ avec le risque d'admettre quelques gouttes de gaz liquide dans le réservoir de stockage 1 au détriment bien entendu de la longévité du produit réactif. Dans ces conditions la température $T'_r$ à laquelle on maintiendra le réservoir de stockage 1 pendant le remplissage sera alors de 10°C.

## Revendications

**1.** Procédé de remplissage d'un réservoir (1) avec un gaz sous phase gazeuse en vue de son stockage dans celui-ci sous phase solide, ce réservoir de stockage (1) contenant à cet effet un produit réactif, le produit réactif et le gaz étant tels que, lorsqu'ils sont mis en présence l'un de l'autre, ils sont l'objet d'une réaction thermochimique ayant pour effet l'absorption du gaz par le produit réactif et la production d'un produit de réaction solide et, à l'inverse, ils sont l'objet d'une réaction de désorption du gaz absorbé par le produit réactif sous l'effet d'un chauffage appliqué à celui-ci lorsqu'il a absorbé du gaz, **caractérisé en ce que** l'on introduit ledit gaz dans le réservoir de stockage (1) :

- soit à une pression de remplissage (Pr) qui est égale à la pression d'équilibre du produit réactif à la température de remplissage plus $\alpha$ fois la différence entre la pression de vapeur saturante (PS) du gaz à la température de remplissage (Tr) et la pression d'équilibre du produit réactif à cette même température; la valeur de $\alpha$ étant

comprise entre 0,1 et 0,9 et étant préférentiellement égale à 0,5 ;
- soit à une température de remplissage (Tr) qui est égale à la température de vaporisation du gaz à la pression de remplissage (Pr) plus β fois la différence entre la température d'équilibre (Te) du produit réactif à la pression de remplissage (Pr) et la température de vaporisation du gaz à cette même pression; la valeur de β étant comprise entre 0,1 et 0,9 et étant préférentiellement égale à 0,5.

2. Procédé de remplissage suivant la revendication 1 **caractérisé en ce que** l'on règle la pression de remplissage (Pr), en agissant sur la température (Tr) du réservoir de stockage (1) et/ou sur celle d'un récipient (2) contenant le gaz.

3. Procédé de remplissage suivant la revendication 2 **caractérisé en ce que** pendant le remplissage :

- on maintient à température constante le réservoir de stockage (1) et le récipient (2) contenant le gaz,
- pour une température de remplissage (Tr) donnée, la température (Tg) de maintien du récipient (2) contenant le gaz est égale à la température de vaporisation du gaz à la pression de remplissage (Pr).

4. Procédé de remplissage suivant la revendication 3 **caractérisé en ce que** ledit maintien à température est obtenu par immersion du réservoir de stockage (1) et/ou du récipient (2) contenant le gaz dans un bain thermostaté.

5. Procédé de remplissage suivant l'une des revendications précédentes **caractérisé en ce que** l'on mélange le produit réactif à un "liant matriciel" pour constituer un mélange réactif.

6. Procédé de remplissage suivant la revendication 5 **caractérisé en ce que** l'on utilise un liant matriciel constitué de graphite naturel expansé.

7. Procédé de remplissage suivant la revendication 6 **caractérisé en ce que** l'on utilise un mélange réactif composé du produit réactif et de graphite naturel expansé dont la masse volumique apparente est comprise entre 40 kg/m$^3$ et 120 kg/m$^3$ et préférentiellement de l'ordre de 50 kg/m$^3$.

8. Procédé de remplissage suivant l'une des revendications précédentes **caractérisé en ce que** le gaz est constitué d'ammoniac.

9. Procédé de remplissage suivant l'une des revendications 5 à 8 **caractérisé en ce que** l'on utilise un mélange réactif dans lequel la proportion en masse du produit réactif est comprise entre 50 et 98% et est préférentiellement de l'ordre de 94%.

10. Procédé de remplissage suivant l'une des revendications précédentes **caractérisé en ce que** l'on utilise un produit réactif qui est notamment constitué de sels alcalins, de sels alcalino-terreux, ou de sels métalliques.

11. Procédé de remplissage suivant la revendication 10 **caractérisé en ce que** l'on utilise un produit réactif constitué de sels du type alcalins, alcalino-terreux, ou métalliques et notamment du chlorure de calcium, du chlorure de baryum, ou du chlorure de manganèse.

**Patentansprüche**

1. Verfahren zur Abfüllung eines Tanks (1) mit einem Gas in Gasphase zu seiner Lagerung darin in der festen Phase, wobei dieser Lagertank (1) zu diesem Zweck ein reaktives Produkt enthält, wobei das reaktive Produkt und das Gas derart sind, dass, wenn sie miteinander in Kontakt gebracht werden, sie Gegenstand einer thermochemischen Reaktion sind, welche als Wirkung die Absorption des Gases durch das reaktive Produkt und die Produktion eines festen Reaktionsprodukts habt, und sie umgekehrt Gegenstand einer Desorptionsreaktion des Gases, das von dem reaktiven Produkt absorbiert ist, unter der Wirkung einer Erwärmung sind, die auf dieses angewendet wird, wenn es das Gas absorbiert hat, **dadurch gekennzeichnet, dass** das Gas in dem Lagertank (1) eingeleitet wird:

- entweder bei einem Fülldruck (Pr), der gleich dem Gleichgewichtsdruck des reaktiven Produkts bei der Fülltemperatur plus α Mal der Differenz zwischen dem Sättigungsdampfdruck (PS) des Gases bei der Fülltemperatur (Tr) und dem Gleichgewichtsdruck des reaktiven Produktes bei dieser gleichen Temperatur ist; wobei der Wert α zwischen 0,1 und 0,9 liegt und vorzugsweise gleich 0,5 ist;
- oder bei einer Fülltemperatur (Tr), die gleich der Verdampfungstemperatur des Gases bei dem Fülldruck (Pr) plus β Mal der Differenz zwischen der Gleichgewichtstemperatur (Te) des reaktiven Produkts bei dem Fülldruck (Pr) und der Verdampfungstemperatur des Gases bei diesem gleichen Druck ist; wobei der Wert β zwischen 0,1 und 0,9 liegt und vorzugsweise gleich 0,5 ist.

2. Verfahren zur Abfüllung nach Anspruch 1, **dadurch gekennzeichnet, dass** der Fülldruck (Pr) eingestellt wird, indem auf die Temperatur (Tr) des Lagertanks (1) und / oder derjenigen des Behälters (2) eingewirkt wird, der das Gas enthält.

3. Verfahren zur Abfüllung nach Anspruch 2, **dadurch gekennzeichnet, dass** während der Abfüllung:

   - die Temperatur des Lagertanks (1) und des Behälters (2), der das Gas enthält, konstant gehalten werden,
   - für eine vorgegebene Fülltemperatur (Tr) die Temperatur (Tg) zur Aufbewahrung des Behälters (2), der das Gas enthält, gleich der Verdampfungstemperatur des Gases bei dem Fülldruck (Pr) ist.

4. Verfahren zur Abfüllung nach Anspruch 3, **dadurch gekennzeichnet, dass** die Aufbewahrung bei der Temperatur durch Eintauchen des Lagertanks (1) und / oder des Behälters (2), der das Gas enthält, in ein thermostatisches Bad erhalten wird.

5. Verfahren zur Abfüllung nach einem der vorstehenden Ansprüche, **dadurch gekennzeichnet, dass** das reaktive Produkt mit einem "Matrixbinder" vermischt ist, um eine reaktive Mischung zu bilden.

6. Verfahren zur Abfüllung nach Anspruch 5 **dadurch gekennzeichnet, dass** ein Matrixbinder verwendet wird, der aus expandiertem Naturgraphit besteht.

7. Verfahren zur Abfüllung nach Anspruch 6, **dadurch gekennzeichnet, dass** eine reaktive Mischung verwendet wird, die aus dem reaktiven Produkt und expandiertem Naturgraphit besteht, dessen scheinbare Dichte zwischen 40 $kg/m^3$ und 120 $kg/m^3$ und vorzugsweise in der Größenordnung von 50 $kg/m^3$ liegt.

8. Verfahren zur Abfüllung nach einem der vorstehenden Ansprüche, **dadurch gekennzeichnet, dass** das Gas aus Ammoniak besteht.

9. Verfahren zur Abfüllung nach einem der Ansprüche 5 bis 8, **dadurch gekennzeichnet, dass** eine reaktive Mischung verwendet wird, in der der Gewichtsanteil des reaktiven Produktes zwischen 50 und 98% liegt und vorzugsweise in der Größenordnung von 94 % ist.

10. Verfahren zur Abfüllung nach einem der vorstehenden Ansprüche, **dadurch gekennzeichnet, dass** ein reaktives Produkt verwendet wird, das insbesondere aus Alkalisalzen, Erdalkalisalzen oder Metallsalzen besteht.

11. Verfahren zur Abfüllung nach Anspruch 10, **dadurch gekennzeichnet, dass** ein reaktives Produkt verwendet wird, das aus Alkali-, Erdalkalimetall- oder Metallsalzen und insbesondere Calciumchlorid-, Bariumchlorid- oder Manganchlorid-salzen besteht.

**Claims**

1. A process for filling a tank (1) with a gas in a gaseous phase for storage therein in solid phase, the storage tank (1) containing for this purpose a reactive product, the reactive product and the gas being such that, when they are brought into contact with each other, they are subject to a thermochemical reaction having the effect of the absorption of the gas by the reactive product and the production of a solid reaction product and, conversely, they are the subject of a desorption reaction of the gas absorbed by the reactive product under the effect of heating applied to said reactive product, when said reactive product has absorbed gas, **characterized in that** said gas is introduced into the storage tank (1) ;

   - either at a filling pressure (Pr) which is equal to the equilibrium pressure of the reactive product at the filling temperature plus α times the difference between the saturation vapor pressure (Ps) of the gas at the filling temperature (Tr) and the equilibrium pressure of the reactive product at said filling temperature; the value of α being comprises between 0.1 and 0.9 and preferably being equal to 0.5 ;
   - or at a filling temperature (Tr) which is equal to the vaporization temperature of the gas at the filling pressure (Pr) plus β times the difference between the equilibrium temperature (Te) of said product reactive at the filling pressure (Pr) and the vaporization temperature of said gas at said filling pressure; the value of β being between 0.1 and 0.9 and preferably being equal to 0.5.

2. The filling process according to claim 1, **characterized in that** said filling pressure (Pr) is adjusted by acting on the temperature (Tr) of the storage tank (1) and/or on the temperature of a container (2) containing said gas.

3. The filling process according to claim 2, **characterized in that** during filling:

- said storage tank (1) and said container (2) containing said gas are kept at a constant temperature,
- for a given filling temperature (Tr), the temperature (Tg) for keeping the container (2) containing said gas is equal to the vaporization temperature of said gas at said filling pressure (Pr).

4. The filling process according to claim 3, **characterized in that** said keeping temperature is obtained by immersion of said storage tank (1) and/or said container (2) containing said gas in a thermostatic bath.

5. The filling process according to one of the above-mentioned claims, **characterized in that** said reactive product is mixed with a "matrix binder" to form a reactive mixture.

6. The filling process according to claim 5, **characterized in that** said matrix binder consists of expanded natural graphite.

7. The filling process according to claim 6, **characterized in that** said reactive mixture is composed of said reactive product and expanded natural graphite, **in that** the bulk density of said expanded natural graphite is between 40 $kg/m^3$ and 120 $kg/m^3$ and preferably of about 50 $kg/m^3$.

8. The filling method according to one of the above-mentioned claims **characterized in that** said gas is ammonia.

9. The filling process according to one of claims 5 to 8, **characterized in that** said reactive mixture comprises by weight between 50% and 98% of said reactive product and preferably about 94% by weight of said reactive product.

10. The filling process according to one of the above-mentioned claims, **characterized in that** said reactive product consists in particular of alkaline salts, alkaline earth salts or metal salts.

11. The filling process according to claim 10, **characterized in that** said reactive product consists of alkaline salts, alkaline earth salts or metal salts and in particular of calcium chloride, barium chloride or manganese chloride.

FIG 1

FIG 2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010025948 A
- US 5441716 A
- FR 1502818